# EUROPEAN PATENT SPECIFICATION

(11) **EP 1 470 357 B1**
(45) Date of publication and mention of the grant of the patent: **10.04.2013**
(21) Application number: 02753355.3
(22) Date of filing: 27.06.2002
(51) Int. Cl.: F16L 21/00, F16L 21/06

(54) **CLAMP FOR JOINING TUBULAR BODIES**
KLEMME ZUM VERBINDEN VON RÖHRENFÖRMIGEN KÖRPERN
BRIDE POUR RACCORDEMENT D'ELEMENTS TUBULAIRES

(30) Priority: 29.06.2001 US 302220 P
(43) Date of publication of application: 27.10.2004
(73) Proprietor: Norma U.S. Holding LLC, Auburn Hills, MI 48326 (US)
(72) Inventor: POTTS, Michael, R., Troy, MI 48083 (US); IGNACZAK, Brian, T., Rochester, MI 48307 (US); AMEDURE, Michael, E., Lake Orion, MI 48360 (US)
(74) Representative: Barker, Rosemary Anne
(86) International application number: PCT/US2002/020580
(87) International publication number: WO 2003/002306

(56) References cited:
- FR-A- 2 689 204
- US-A- 2 189 350
- US-A- 4 049 298
- US-A- 4 360 227
- US-A- 4 380 348
- US-A- 5 383 496
- US-A- 5 383 496

## Description

### TECHNICAL FIELD

This invention relates to band clamps and more particularly it relates to band clamps for joining tubular bodies.

### BACKGROUND OF THE INVENTION

There are many applications in industry which require the joining of two tubular bodies such as pipes, canisters and the like for containing fluid under pressure. Many of these applications require a joint which can be readily opened or disassembled for purposes of maintenance or repair. An example is that of vehicle engine exhaust systems wherein several different exhaust system components such as mufflers, catalytic converters, particulate filters and pipes are coupled together for discharging the exhaust gases to the atmosphere. In exhaust systems, the typical components are round or roundish in cross-section and the joints must provide a good fluid seal against exhaust gas leakage. Also, the joints must exhibit a high degree of mechanical strength for withstanding road shock and vibration without loosening and without impairment of the sealing properties of the joint.

In some applications, a joint must be provided between components which are substantially larger in girth than that of the pipes which are typically used between components such as mufflers and catalytic converters. This may involve either lap joints or butt joints, either of which may utilize circumferential ribs or beads to provide a positive mechanical engagement of the coupler with the components being joined. For configurations such as this where a rib or bead is used, various band clamp arrangements have been proposed. V-band clamps are well known, and different examples of these are shown in U.S. Patent Nos. 2,731,280 to Goodliffe et al., 5,411,162 to Koziczkowski et al., and 6,073,977 to Schmidt-Hansen et al. As shown in the last of these, a rubber seal can be included that spans the two beads. Band straps having spaced circumferential ribs are also known for use in connecting sheet metal pipes. See U.S. Patent No. 3,207,538 to Pattillo. The draw band disclosed therein comprises an open loop in which the ends overlap each other when the band is tightened. Such an arrangement results in a discontinuous step at the inner terminal end of the band and can be problematic for applications where a strong hermetic seal is needed such as in vehicle exhaust systems. This can be true even where a gasket is provided since the gasket is not subjected to uniform inwardly radial pressure at the inner terminal end of the band. Other examples of band clamps can be seen in US 4360227.

It is a general objective of this invention to provide an improved band clamp assembly which overcomes certain disadvantages of the prior art.

### SUMMARY OF THE INVENTION

In accordance with this invention, a band clamp assembly is provided as specified in claim 1 for making a joint which exhibits high pull-apart strength and also provides a good seal against fluid leakage.

This assembly permits the band clamp to be retrofitted to existing tubular bodies, such as vehicle exhaust system components, that do not include any ribs or beads at their adjoining ends.

A complete understanding of this invention may be obtained from the detailed description that follows taken with the accompanying drawings.

### BRIEF DESCRIPTION OF THE DRAWING

Preferred exemplary embodiments will hereinafter be described in conjunction with the appended drawings, wherein like designations denote like elements, and wherein:
Figure 1 is a perspective view of a first embodiment of a band clamp but not within the scope of this invention;
Figure 2 is a perspective view of two tubular bodies joined by the band clamp of Fig. 1;
Figure 3 is a side elevation view of the assembly as shown in Fig. 2;
Figure 4 is an end view of the assembly as shown in Fig. 2;
Figure 5 is a sectional view taken on lines 5-5 of Fig. 4;
Figure 6 is a sectional view taken on lines 6-6 of Fig. 4;
Figure 7 is an enlarged, Fragmentary sectional view as in Fig. 6 showing a pre-assembled condition of a modification of the first embodiment that includes a fiberglass gasket;
Figure 8 is sectional view as in Fig. 7 following assembly and tightening of the band clamp with its fiberglass gasket;
Figure 9 is a cross-sectional view of the gasket of Figs. 7 and 8;
Figure 10 is a sectional view as in Fig. 7 showing a pre-assembled condition of another modification of the first embodiment that includes a graphite gasket;
Figure 11 is sectional view as in Fig. 8 following assembly and tightening of the band clamp with its graphite gasket;
Figure 12 is a fragmentary, perspective view of the inside pocket and tongue portion of the first embodiment showing use of the fiberglass gasket of Figs. 7 and 8;
Figure 13 is a perspective view of an embodiment of a band clamp in accordance with the assembly of this invention;
Figure 14 is a reverse perspective view of the band clamp of Fig. 13 showing the closing of the band and gasket during tightening of the clamp;
Figure 15 is an exploded view of the gasket, band, and strap portions of the band clamp of Fig. 13;
Figure 16 is a perspective view of a third embodiment of a band clamp wherein the band clamp includes inverted (concave) ribs;
Figure 17 is a fragmentary sectional view of either of the first two embodiments of the band clamp in a pre-assembled condition as it could be used with a fiberglass gasket for a lap joint between tubular bodies;
Figure 18 is a view as in Fig. 17 following assembly and tightening of the band clamp;
Figure 19 is a fragmentary sectional view of either of the first two embodiments of the band clamp in a pre-assembled condition as it could be used with a graphite gasket for a lap joint between tubular bodies;
Figure 20 is a view as in Fig. 19 following assembly and tightening of the band clamp;

### DETAILED DESCRIPTION

Referring now to the drawings, the invention will be described with respect to different embodiments of a band clamp especially adapted for making a joint between two tubular members. The invention will be described with reference to its use in a vehicle exhaust system. In this application, the band clamp is preferably made of stainless steel.

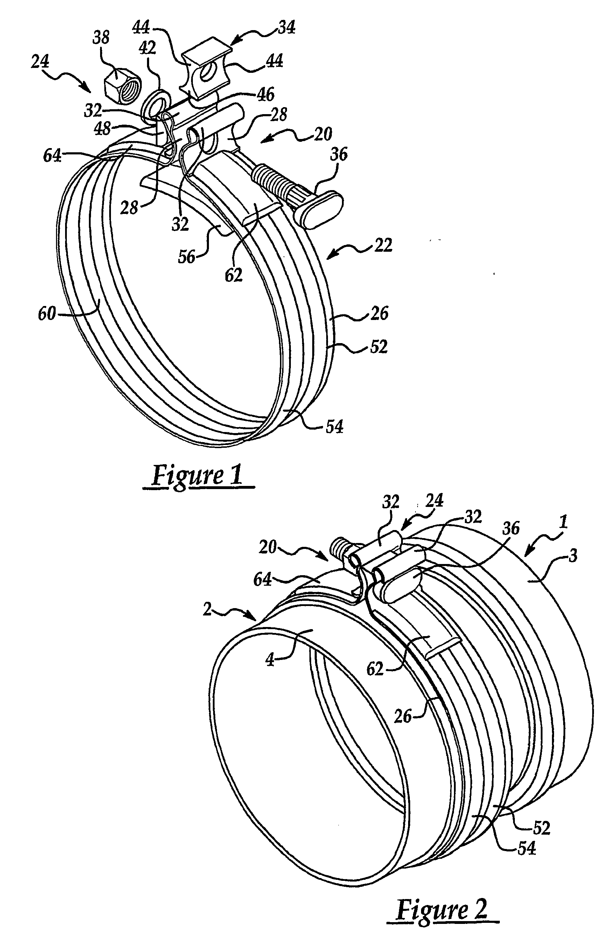

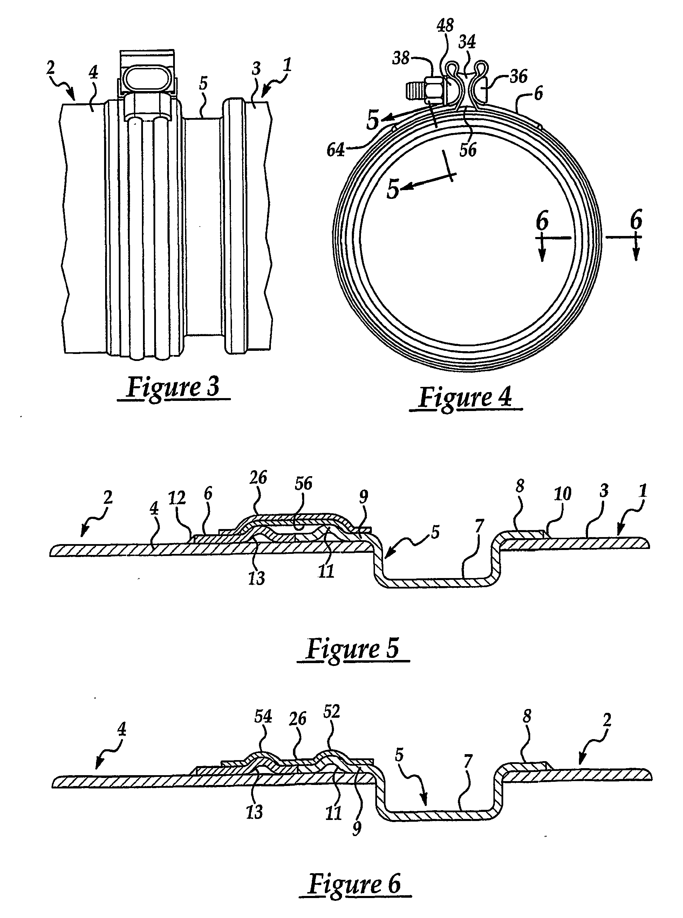

The following illustrative example is applicable to retrofitting the band clamp assembly of this invention to a catalytic converter and particulate filter. These devices are currently manufactured by providing an adapter on each such device which will accept a suitable band clamp in accordance with this invention. In particular and with reference to Figs. 1-6, the band clamp assembly is used for making a joint between a catalytic converter 1 and a particulate filter 2. The converter 1 has a cylindrical casing 3 and the filter 2 has a cylindrical casing 4 which is substantially the same diameter as casing 3. Both casings 3 and 4, at their adjoining ends, are substantially the same diameter and have a plain cylindrical surface, as they are conventionally manufactured. In order to use the band clamp with these conventional casings 3 and 4, it is necessary to use an adapter member on each casing. These adapters along with the band clamp together comprise a clamping assembly that is useful in retrofit applications where the tubular bodies are not specifically manufactured to be used with the band clamp. The band clamp will coact with the adapter to make a joint between the ends of the converter and the filter which will provide high pull-apart strength and a good fluid seal against exhaust gas leakage. In order to adapt the ends of the converter 1 and filter 2 to the characteristics of the clamp, an adapter collar 5 on either the converter or filter and a mating adapter ring 6 on the other are provided. The adapter collar 5, as best shown in Fig. 5, comprises an annular bridging member 7 which is trough-shape in cross-section with longitudinally extending edge flanges 8 and 9. The edge flange 8 encircles the end of the cylindrical housing 3 of the converter and the end flange 9 encircles the end of the cylindrical housing 4 of the filter. The end flange 8 is attached around its periphery to the cylindrical housing 3 by a weld 10. The edge flange 9 is provided with an annular rib 11 which coacts with the band clamp in a manner to be described below. The adapter ring 6 encircles the cylindrical filter casing 4 and is attached thereto by a weld 12. The ring 6 is formed with an annular rib 13 which is adapted to coact with the band clamp 20 as will be described below.

When the catalytic converter 1 and the particulate filter 2 are to be joined together, the end of the cylindrical filter casing 4 is inserted into the edge flange 9 of the adapter collar 5, with the opposed ends of the adapter ring 6 and the edge flange 9 in abutment with each other as shown in Figs. 5 and 6. Then, the clamp band 20 is disposed around the annular ribs 11 and 13 as will be described below.

### First Embodiment

The first embodiment of the band clamp described with reference to Figs. 1-6 is no longer within the scope of the clamping assembly of this invention. The band clamp 20 comprises, in general, a clamp band 22 and a clamp tightening mechanism 24. The band 22 comprises a clamp sleeve 26 that is formed as a roundish-shaped sector which defines a circumferential loop. The band 22 has first and second ends which in this embodiment are located at a pair of confronting end flanges 28 that extend radially from the band and are unitary therewith. The end flanges 28 serve as parts of the clamp tightening mechanism 24. Each end flange 28 terminates at its outer end in a retainer bight 32 which is formed by folding the end of the flange on itself to provide a double layer of sheet metal. These folded end flanges 28 comprise clamping members that, when drawn together, pull the first and second ends of the band toward each other to thereby tighten the band clamp.

The clamp tightening mechanism 24 comprises the pair of end flanges 28, a reaction member or spline 34, bolt 36, spacer bar 48, nut 38 and a washer 42. The spline 34 has opposed sidewalls 44 which are arcuate and concave in cross-section; it also has an inner surface 46 which is concave in cross-section with a curvature conforming to the member it seats against when the clamp is tightened. The head of bolt 36 is disposed adjacent one end flange 28 and has an inner surface with an arcuate cross-section corresponding to the opposed surface of the spline 34. The spacer bar 48 is disposed adjacent the other end flange and has an arcuate cross-section on its inner surface corresponding to that of the reaction member 34. The end flanges 28, spline 34 and spacer bar 48 are provided with aligned bolt holes for receiving the shank of the bolt 36 with the bolt head seated on the outside surface of one end flange 28 and with the nut 38 and washer 42 seated against the outside surface of the other end flange 28.

The clamp band 22 is made from the single piece of sheet metal, preferably stainless steel, delimited circumferentially by the end flanges 28 and axially by a pair of lateral edges that extend between the first and second ends. The band 22 is provided with structural parts including annular ribs 52 and 54, dome-shaped pockets 62,64 and 58, and a central portion 60 between the ribs 52 and 54. These elements, along with end flanges 28, bights 32, and bolt holes are all preferably formed by conventional metal-forming techniques with the material in a flat condition. After the above-mentioned metal-forming operations, the clamp band 22 is additionally formed into an open loop structure as best shown in Fig. 1.

The annular ribs 52 and 54 have a cross-sectional configuration which is arcuate and convex with respect to the outer surface of the sleeve 26. This cross-sectional configuration of ribs 52 and 54 conforms with that of the ribs 11 and 13 provided in the adapter collar 5 and the adapter ring 6, respectively. The ribs 52 and 54 are located inwardly of the lateral edges and are spaced from each other by a distance that permits mating of each clamping rib 52 and 54 with its respective rib 11 and 13 from one of the two adapters. The central portion 60 spans the distance between the clamping ribs 52 and 54 and overlies the junction between the adapters 5 and 6 when the band is assembled over their adjoining ends.

As shown in Fig. 6, the mating pair of ribs 52 and 11 and the mating pair of ribs 54 and 13 both provide a good gas seal by virtue of the tight engagement which can be achieved throughout circumferential length of the ribs. In order to provide a good gas seal in the vicinity of the clamp tightening mechanism 24, a tongue 56 is provided which spans the gap between the end flanges 28 and overlaps a part of the clamp sleeve 26 on both sides of the gap. The amount of overlap on each side of the gap is suitably about one-eighth of the circumference of the band clamp. The tongue 56, as shown in Fig. 5, is flat in the central region extending between the peaks of the ribs 11 and 13 and is arcuate at its free edges with a curvature corresponding to the outboard portions of the ribs so as to provide close sealing engagement therewith. As shown in Figs. 1 and 4, the clamp sleeve 26 is provided with dome-shaped pockets 62 and 64 each of which extends circumferentially from a respective end flange 28. The pockets 62 and 64 are suitably of equal circumferential length and the length between their outer ends is sufficient to accommodate the tongue 56 within the dome-shaped pockets. The tongue 56 is suitably welded at one end to the clamp sleeve 26. The clamp sleeve has a cross-sectional configuration throughout the dome-shaped pocket 56 as shown in Fig. 5. This cross-section includes a central region spanning the width of the tongue 56 in close conformity therewith and terminating in opposite edges which are flat and in engagement with the flat portions of the respective adapter ring 6 and adapter collar 5. The dome-shape pocket 62 is of the same configuration as dome-shape pocket 64.

In use of the band clamp 20, it is applied in its loosely assembled condition around either the converter 1 or the filter 2 before these two components are brought together. When the converter and filter are positioned with the edge flange 9 abutted against the adapter ring 6, the clamp band is positioned so that the annular ribs 52 and 54 are mated with the ribs 11 and 13, respectively. Then, the band clamp 24 is tightened to a specified torque to achieve a final tightening of the clamp. In this condition, the clamp sleeve 26 is stretched around the annular ribs 11 and 13 and applies a clamp load which is sufficient to cause the mating ribs 11 and 52 and the mating ribs 13 and 54 to be in fluid tight engagement around the periphery of the ribs; further, the tongue 56 is pressed in tight sealing engagement against the ribs 11 and 13 by the clamp sleeve 26 which engages at its outer edges with the flat portions of the adapter ring 6 and the edge flange 9 to form a gas tight seal.

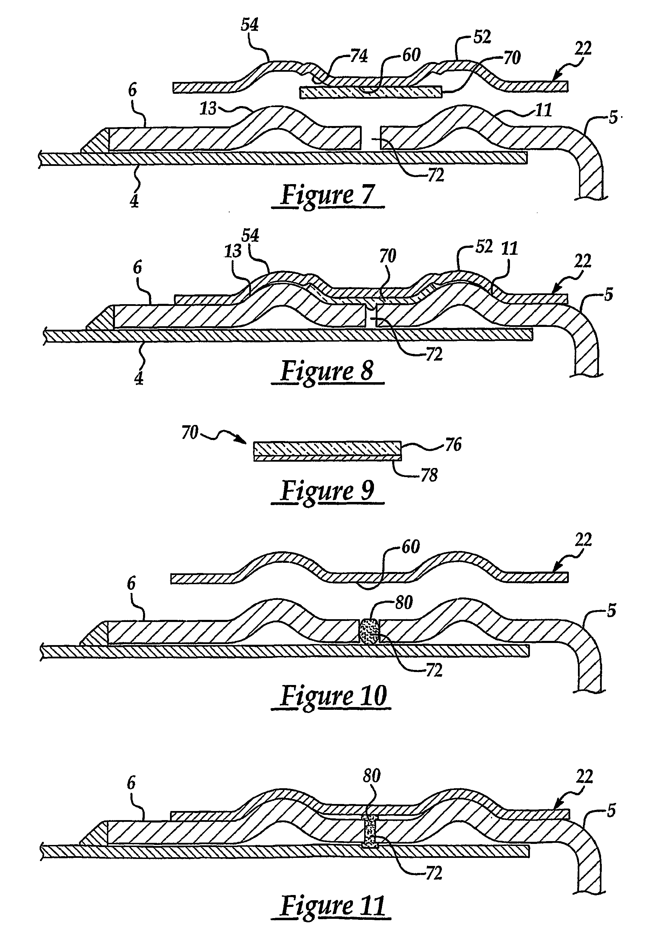

Referring now to Figs. 7 and 8, in a first modified form of the embodiment of Figs. 1-6, a gasket 70 is provided at the central portion 60 to further improve the sealing of the adapter collar 5 and ring 6 against the escape of gas through the junction 72 formed between these components. As shown in Fig. 7, the gasket 70 is initially attached to the band 22 at its central portion 60 by an adhesive or the like, and this can be done as a part of the manufacturing of the band clamp itself. Alternatively, the gasket 70 could be provided as a separate component that is not attached to the band 22 until final assembly of the clamp over the components being joined. As shown, the gasket is provided with a sufficient width to span the junction 72 and provide a significant sealing overlap with each of the two adapters 5 and 6. For this purpose, the gasket 70 partially overlies the ribs; however, it does not entirely cover the ribs in order to provide good metal-to-metal contact of the adapter ribs 11, 13 with the clamping ribs 52, 54. To accommodate the thickness of the gasket 70 and maximize this metal-to-metal contact of the libs, the central portion 60 of the band 22 is recessed as shown at 74, with this recess extending from an inner side edge of one rib 52 across the central portion 60 to the other rib 54.

Gasket 70 comprises a compressible material and any of a number of suitable homogenous or composite gasket materials can be used depending upon the temperature and mechanical durability constraints required for a particular application. For example, the gasket 70 can be a fiberglass or mica gasket. In the illustrated embodiment, a fiberglass gasket having an aluminum outer surface is used, as shown in Fig. 9. This gasket 70 includes a layer of temperature resistant silica fabric 76 rated for 980°C that is aluminized. This aluminum surface 78 is oriented to face radially inwardly when the gasket is attached to the band 22 so that the aluminum surface 78 directly contacts the outer surface of the adapters 5 and 6.

Referring now to Figs. 10 and 11, another modified version of the first embodiment is shown using a graphite gasket 80 in lieu of the fiberglass gasket 70 of Figs. 7-9. This graphite gasket can be a braided Inconel™ with carbon yarn that is impregnated with graphite. Gasket 80 is initially placed within the junction 72 between the adapters 5 and 6 and is sized to be somewhat wider than the ultimate span of the junction when the band 22 is tightened over the adapters. Thus, as shown in Fig. 11, tightening of the band acts to draw the adjoining end faces of the adapters toward each other, compressing the gasket 80 axially and thereby forming a hermetic seal at the junction 72. As will be understood by those skilled in the art, fiberglass gaskets such as gasket 70 can be compressed radially, as occurs in the assembly shown in Figs. 7 and 8, whereas graphite gaskets such as shown in Figs. 10 and 11 work well when compressed axially.

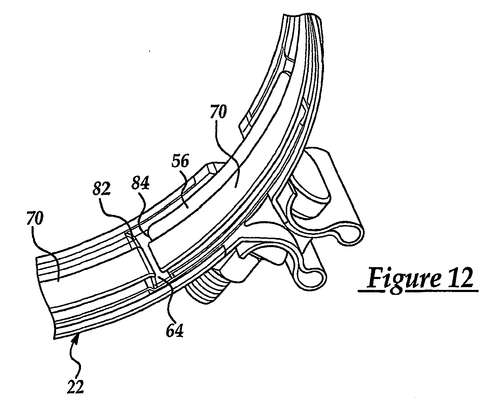

Another difference between gaskets 70 and 80 is that the graphite gasket comprises a closed loop that is assembled onto the assembly separately from the band 22, whereas the gasket 70 is an open loop in the form of a strip of gasket material that is discontinuous at its ends. As shown in Fig. 12, the gasket 70 extends circumferentially around the band 22 starting at an edge 82 of pocket 64 and terminating at the edge 84 of tongue 56 that is adjacent the starting edge 82. Preferably, the gasket 70 extends slightly beyond the end 84 of the tongue 56 so that the opposite ends of the gasket overlap each other when the band 22 is fully tightened.

### Embodiment of this Invention

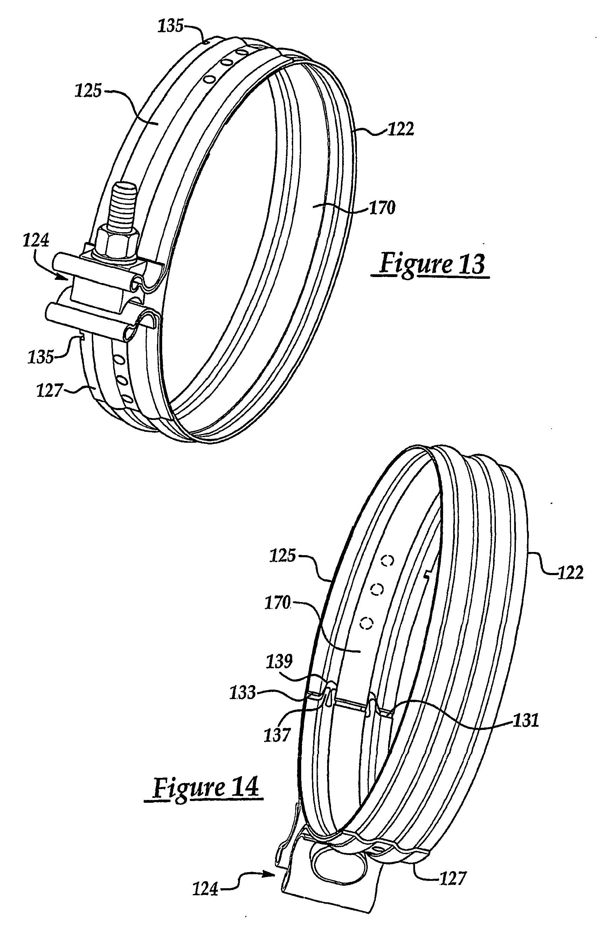

Turning now to Figs. 13-15 an embodiment of a band clamp in accordance with this invention is shown which in accordance with this invention is to be used in conjunction with the adapters 5 and 6 shown in Figs. 1-6. Elements of this embodiment of band clamp that correspond functionally to similar elements of the first embodiment are identified with numerals offset by 100 from those used in the first embodiment. Some of these components can be constructed identically to the corresponding components from the first embodiment such as, for example, the tightening mechanism.

Thus, band clamp 120 of Figs. 13-15 include a band 122 and tightening mechanism 124. Whereas the clamp members 28 of the first embodiment are unitary extensions of the band 22 itself, the clamp members 128 of this second embodiment are formed as confronting portions of a pair of strap sections 125 and 127 that are attached to band 122 by three spot welds each. This enables band 122 to form a single open loop extending from a first end 131 to a second end 133 with these ends being aligned with each other and spaced by a gap that can be closed when the band is fully tightened. In this way, the pocket and tongue construction of the first embodiment is eliminated and replaced by a substantially continuous sealing surface extending circumferentially all the way around the band 122. The aligned ends 131 and 133 of band 122 are located at a different angular position about the circumference of the band than the tightening mechanism 124, so that the strap section 125 therefore overlies the gap. For this purpose, the strap section 125 is approximately twice as long as strap section 127. Both strap sections span the entire width of band 122 to add mechanical strength to the overall band clamp.

The band clamp 120 is designed to have a total circumferential distance about its inner surface that is specific to the particular application for which it is used so that it can be fully tightened when in use and will provide a desired amount of clamping force when fully tightened. To accurately maintain this specific distance when attaching the strap sections 125 and 127 to the band 122, alignment notches 135 are provided in both the band 122 and each of the strap sections so that proper registration of the strap sections with the band can be maintained during welding.

As best seen in Fig.14, the first and second ends 131 and 133 of the band are separated by a gap that is adjustable by tightening and loosening of the clamping mechanism 124. These first and second ends include complementary mating portions 137 and 139 that come into engagement during tightening of the band 122. In the embodiment shown, these mating portions include two sets of spring members 137 in the first end 131 and two grooves 139 in the second end 133. During tightening of the band clamp 120, each pair of spring members engage opposing edges of their associated groove and are squeezed towards each other to thereby form an interference fit with the groove. In this way, the band 122 provides a substantially continuous sealing surface about its circumference. The construction and use of the spring members and grooves are more fully disclosed in U.S. Patent Application Publication No. US 2002/0014772 A1. The spring members and grooves can be located at the two ribs; that is, circumferentially aligned with the ribs.

The band clamp 120 includes a fiberglass gasket 170 as in Figs. 7-9, although depending upon the particular application, a graphite or other gasket, or even no gasket may be used. Gasket 170 extends from the first end 131 of the band 122 to its second end and is discontinuous at these ends. As with the first embodiment shown in Fig. 12, the gasket can extend slightly beyond one or both of the ends 131 and 133 so that opposite ends of the gasket overlie each other when the band clamp is fully tightened.

### Third Embodiment

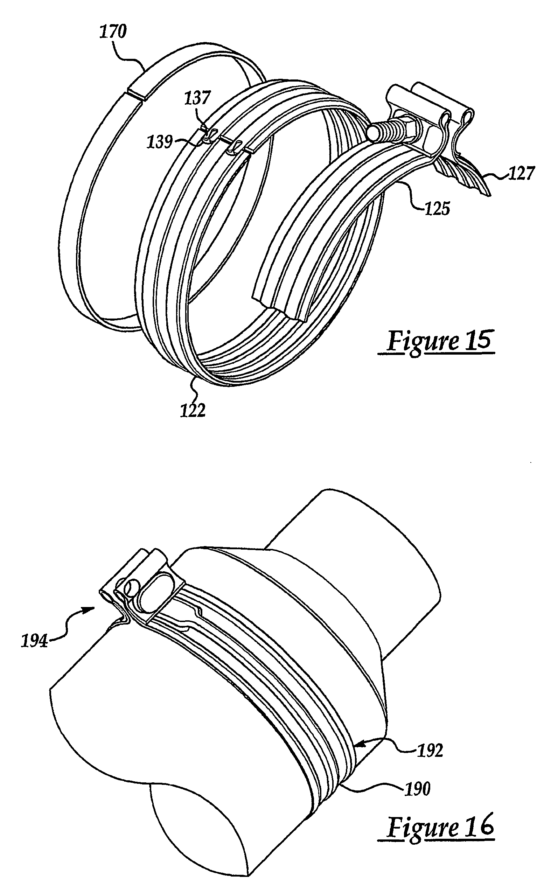

The third embodiment can be implemented the same as in the first or second embodiments except for the structure of the annular ribs. In the third embodiment shown in Fig. 16, the ribs 190 on the band 192 of the band clamp 194 are concave in cross-section with reference to the outer surface of the clamp sleeve instead of being convex as in the first two embodiments. Likewise, the annular ribs on the components being joined (such as the catalytic converter and particulate filter) are concave with respect to the outer surface. Otherwise the structure of the clamp band is the same as that of the first two embodiments.

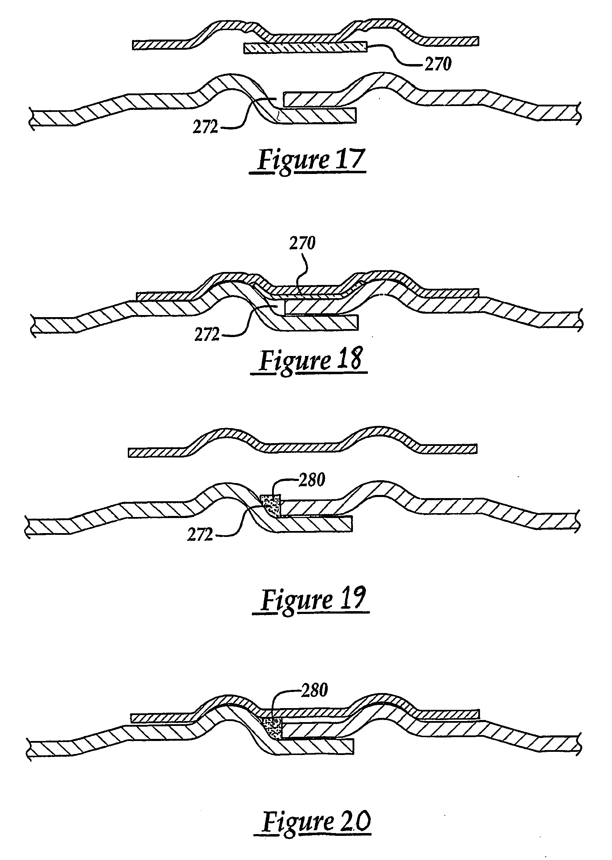

The first three embodiments discussed above have involved the joining of tubular bodies or adapters having abutting ends. As shown in Figs. 17-20 the band clamp assembly of this invention can be used for lap joints as well. As in the first embodiments, it will be noted that, where a gasket 270 or 280 is used, it is located at the junction 272 between the bodies to thereby provide a hermetic seal.

It will thus be apparent that there has been provided in accordance with the present invention a band clamp and clamping assembly which achieves the aims and advantages specified herein. It will of course be understood that the foregoing description is of preferred exemplary embodiments of the invention and that the invention is not limited to the specific embodiments shown. Various changes and modifications will become apparent to those skilled in the art and all such variations and modifications are intended to come within the scope of the appended claims.

## Claims

1. A clamping assembly for connecting first and second tubular bodies (3, 4) comprising:
a first adaptor (5) separate and distinct from said tubular bodies and having a bridging member (7) with a first edge flange (8) at one axial end and a second edge flange (9) at a second axial end, said first edge flange being constructed to be secured to an outer surface of the first tubular body (3) and said second edge flange being constructed to be positioned over an outer surface of the second tubular body (4), said first adaptor (5) including a first circumferential rib (11) located at said second edge flange (9);
a second adaptor (6) separate and distinct from said first adaptor (5) and having a second circumferential rib (13) and being constructed to be secured to an outer surface of the second tubular body (4) such that said second circumferential rib is adjacent said first circumferential rib (11) of said first adaptor with said ribs overlying the second tubular body (4);
and a band clamp (120; 194; 220) for making a joint with the first and second adaptors (5, 6), the band clamp (120; 194; 220) comprising a band (122; 192; 222) extending from a first end (131) to a second end (133) and including a pair of spaced ribs (52, 54; 190) extending at least part way between said first and second ends, a tightening mechanism (124; 224) connected to said band and including two clamp members (128) movable toward and away from each other to draw said first and second ends toward and away from each other for tightening and loosening of said band, and a gasket (70, 80; 170; 270, 280) located on an inner surface of said band between said ribs and extending between said first and second ends (131, 133), said gasket comprising a strip of compressible material located to provide a seal at the junction (72) between the first and second adaptors (5, 6) to prevent escape of fluid through said junction, wherein the spaced ribs (52, 54) are clamping ribs which are spaced from each other by a distance that permits mating of each clamping rib with a corresponding rib (11,13) from one of the two adaptors when the band is assembled over adjacent axial ends of the two adaptors;
wherein said clamp members (128) comprise confronting portions of a pair of strap sections (125, 127) each secured to an outer surface of said band (122) near a different one of said first and second ends, said band being continuous between said first and second ends (131, 133) with said ends being aligned with each other and spaced by a gap having a length that can be varied by tightening or loosening said band using said tightening mechanism (124), with one of said strap portions traversing said gap such that said gap is located at a different angular position about the circumference of said band than said clamp members (128); and
wherein said gasket in its location between said ribs at most only partially overlies said ribs in order to provide good metal-to-metal contact between the adaptor ribs (11, 13) and the clamping ribs (52, 54).

2. A clamping assembly as defined in claim 1, wherein said first adaptor (5) comprises a collar having a different cross-sectional shape than said second adaptor (6).

3. A clamping assembly as defined in claim 1, wherein said first and second ends (131, 132) include complementary mating portions that come into engagement during tightening of said band.

4. A clamping assembly as defined in claim 3, wherein said first end includes at least one set of spring members (137) and said second end includes at least one groove (139) aligned with said spring members, wherein said spring members engage opposing edges of said groove and form an interference fit with said groove when said band is tightened using said tightening mechanism.

5. A clamping assembly as defined in claim 3, wherein said mating portions are circumferentially aligned with said ribs.

6. A clamping assembly as defined in any one of claims 1 to 5 wherein said gasket (170) is discontinuous at said ends (131, 132).

7. A clamping assembly as defined in claim 6 wherein said gasket extends beyond at least one of said ends such that opposite ends of said strip overlap when said band is tightened.

8. A clamping assembly as defined in any preceding claim, wherein said gasket comprises a fibreglass gasket, a graphite gasket or a mica gasket.

9. A clamping assembly as defined in claim 8, wherein said gasket comprises a fibreglass gasket that includes an aluminium inner surface facing radially inwardly.

10. A clamping assembly as defined in any preceding claim, wherein said gasket is attached over a central portion (60) of said band and partially overlies each of said ribs (52, 54).

## Patentansprüche

1. Klemmanordnung zum Verbinden eines ersten und eines zweiten röhrenförmigen Körpers (3, 4), die umfasst:
einen ersten Adapter (5), der von den röhrenförmigen Körpern getrennt und verschieden ist und ein Überbrückungselement (7) mit einer ersten Kantenflanke (8) an einem axialen Ende und einer zweiten Kantenflanke (9) an einem zweiten axialen Ende aufweist, wobei die erste Kantenflanke so konstruiert ist, dass sie an einer äußeren Oberfläche des ersten röhrenförmigen Körpers (3) befestigt wird und die zweite Kantenflanke so konstruiert ist, dass sie über einer äußeren Oberfläche des zweiten röhrenförmigen Körpers (4) angeordnet wird, wobei der erste Adapter (5) eine erste Umfangsrippe (11) umfasst, die an der zweiten Kantenflanke (9) angeordnet ist;
einen zweiten Adapter (6), der vom ersten Adapter (5) getrennt und verschieden ist und eine zweite Umfangsrippe (13) aufweist und so konstruiert ist, dass er an einer äußeren Oberfläche des zweiten röhrenförmigen Körpers (4) befestigt wird, so dass die zweite Umfangsrippe zur ersten Umfangsrippe (11) des ersten Adapters benachbart ist, wobei die Rippen über dem zweiten röhrenförmigen Körper (4) liegen;
und ein Spannband (120; 194; 220) zur Herstellung einer Verbindung mit dem ersten und dem zweiten Adapter (5, 6), wobei das Spannband (120; 194; 220) ein Band (122; 192; 222), das sich von einem ersten Ende (131) zu einem zweiten Ende (133) erstreckt und ein Paar von beabstandeten Rippen (52, 54; 190), die sich zumindest teilweise zwischen dem ersten und dem zweiten Ende erstrecken, umfasst, einen Spannmechanismus (124; 224), der mit dem Band verbunden ist und zwei Klemmelemente (128) umfasst, die zueinander hin und voneinander weg bewegbar sind, um das erste und das zweite Ende zueinander hin und voneinander weg zu ziehen, zum Spannen und Lockern des Bandes, und eine Dichtung (70, 80; 170; 270, 280), die an einer inneren Oberfläche des Bandes zwischen den Rippen angeordnet ist und sich zwischen dem ersten und dem zweiten Ende (131, 133) erstreckt, umfasst, wobei die Dichtung einen Streifen aus komprimierbarem Material umfasst, der angeordnet ist, um eine Abdichtung am Übergang (72) zwischen dem ersten und dem zweiten Adapter (5, 6) bereitzustellen, um den Austritt von Fluid durch den Übergang zu verhindern, wobei die beabstandeten Rippen (52, 54) Klemmrippen sind, die um einen Abstand voneinander beabstandet sind, der die Paarung von jeder Klemmrippe mit einer entsprechenden Rippe (11, 13) von einem der zwei Adapter ermöglicht, wenn das Band über benachbarten axialen Enden der zwei Adapter montiert wird;
wobei die Klemmelemente (128) gegenüberliegende Teile eines Paars von Riemenabschnitten (125, 127) umfassen, die jeweils an einer äußeren Oberfläche des Bandes (122) nahe einem unterschiedlichen der ersten und zweiten Enden befestigt sind, wobei das Band zwischen dem ersten und dem zweiten Ende (131, 133) kontinuierlich ist, wobei die Enden aufeinander ausgerichtet sind und durch einen Spalt mit einer Länge beabstandet sind, die durch Spannen oder Lockern des Bandes unter Verwendung des Spannmechanismus (124) verändert werden kann, wobei einer der Riementeile den Spalt durchquert, so dass der Spalt in einer anderen Winkelposition um den Umfang des Bandes angeordnet wird als die Klemmelemente (128); und
wobei die Dichtung an ihrer Stelle zwischen den Rippen höchstens nur teilweise über den Rippen liegt, um einen guten Metall-Metall-Kontakt zwischen den Adapterrippen (11, 13) und den Klemmrippen (52, 54) vorzusehen.

2. Klemmanordnung nach Anspruch 1, wobei der erste Adapter (5) einen Kranz mit einer anderen Querschnittsform als der zweite Adapter (6) umfasst.

3. Klemmanordnung nach Anspruch 1, wobei das erste und das zweite Ende (131, 132) komplementäre Eingriffsteile umfassen, die während des Spannens des Bandes in Eingriff kommen.

4. Klemmanordnung nach Anspruch 3, wobei das erste Ende mindestens einen Satz von Federelementen (137) umfasst und das zweite Ende mindestens eine Nut (139) umfasst, die auf die Federelemente ausgerichtet ist, wobei die Federelemente mit gegenüberliegenden Kanten der Nut in Eingriff kommen und einen Presssitz mit der Nut bilden, wenn das Band unter Verwendung des Spannmechanismus gespannt wird.

5. Klemmanordnung nach Anspruch 3, wobei die Eingriffsteile auf dem Umfang auf die Rippen ausgerichtet sind.

6. Klemmanordnung nach einem der Ansprüche 1 bis 5, wobei die Dichtung (170) an den Enden (131, 132) diskontinuierlich ist.

7. Klemmanordnung nach Anspruch 6, wobei die Dichtung sich über mindestens eines der Enden hinaus erstreckt, so dass entgegengesetzte Enden des Streifens überlappen, wenn das Band gespannt wird.

8. Klemmanordnung nach einem vorangehenden Anspruch, wobei die Dichtung eine Glasfaserdichtung, eine Graphitdichtung oder eine Glimmerdichtung umfasst.

9. Klemmanordnung nach Anspruch 8, wobei die Dichtung eine Glasfaserdichtung umfasst, die eine Aluminiuminnenfläche umfasst, die radial einwärts gewandt ist.

10. Klemmanordnung nach einem vorangehenden Anspruch, wobei die Dichtung über einem zentralen Teil (60) des Bandes befestigt ist und teilweise über jeder der Rippen (52, 54) liegt.

## Revendications

1. Ensemble de serrage pour raccorder un premier et un second corps tubulaire (3, 4) comprenant :
un premier adaptateur (5) séparé et distinct desdits corps tubulaires et ayant un élément formant pont (7) avec un premier rebord de bord (8) au niveau d'une extrémité axiale et un second rebord de bord (9) au niveau d'une seconde extrémité axiale, ledit premier rebord de bord étant construit pour être fixé sur une surface externe dudit premier corps tubulaire (3) et ledit second rebord de bord étant construit afin d'être positionné sur une surface externe du premier corps tubulaire (4), ledit premier adaptateur (5) comprenant une première nervure circonférentielle (11) positionnée au niveau dudit second rebord de bord (9) ;
un second adaptateur (6) séparé et distinct dudit premier adaptateur (5) et ayant une seconde nervure circonférentielle (13) et étant construit pour être fixé sur une surface externe du second corps tubulaire (4) de sorte que ladite seconde nervure circonférentielle est adjacente à ladite première nervure circonférentielle (11) dudit premier adaptateur avec lesdites nervures qui recouvrent le second corps tubulaire (4) ;
et un collier de serrage (120 ; 194 ; 220) pour faire un joint avec les premier et second adaptateurs (5, 6), le collier de serrage (120 ; 194 ; 220) comprenant une bande (122 ; 192 ; 222) s'étendant à partir d'une première extrémité (131) jusqu'à une seconde extrémité (133) et comprenant une paire de nervures espacées (52, 54 ; 190) s'étendant au moins en partie entre lesdites première et seconde extrémités, un mécanisme de serrage (124 ; 224) raccordé à ladite bande et comprenant deux éléments de serrage (128) mobiles vers et à distance l'un de l'autre pour tirer lesdites première et seconde extrémités vers et à distance l'une de l'autre pour serrer et desserrer ladite bande, et un joint statique (70, 80 ; 170 ; 270, 280) situé sur une surface interne de ladite bande entre lesdites nervures et s'étendant entre lesdites première et seconde extrémités (131, 133), ledit joint statique comprenant un ruban de matériau compressible positionné pour fournir un joint d'étanchéité au niveau de la jonction (72) entre les premier et second adaptateurs (5, 6) pour empêcher la fuite du fluide à travers ladite jonction, dans lequel les nervures espacées (52, 54) sont des nervures de serrage qui sont espacées les unes des autres par une distance qui permet le couplage de chaque nervure de serrage avec une nervure (11, 13) correspondante à partir de l'un des deux adaptateurs lorsque la bande est assemblée sur les extrémités axiales adjacentes des deux adaptateurs ;
dans lequel lesdits éléments de serrage (128) comprennent des parties en vis-à-vis d'une paire de sections de sangle (125, 127) chacune fixée sur une surface externe de ladite bande (122) à proximité d'une extrémité différente desdites première et seconde extrémités, ladite bande étant continue entre lesdites première et seconde extrémités (131, 133) avec lesdites extrémités qui sont alignées l'une par rapport à l'autre et espacées par un espace ayant une longueur qui peut être modifiée par le serrage ou le desserrage de ladite bande à l'aide du mécanisme de serrage (124), avec l'une desdites parties de sangle traversant ledit espace de sorte que ledit espace est positionné à une position angulaire différente autour de la circonférence de ladite bande desdits éléments de serrage (128) ; et
dans lequel ledit joint statique dans son emplacement entre lesdites nervures recouvre au maximum uniquement partiellement lesdites nervures afin de fournir un bon contact métal sur métal entre les nervures d'adaptateur (11, 13) et les nervures de serrage (52, 54).

2. Ensemble de serrage selon la revendication 1, dans lequel ledit premier adaptateur (5) comprend un collier ayant une forme transversale différente dudit second adaptateur (6).

3. Ensemble de serrage selon la revendication 1, dans lequel lesdites première et seconde extrémités (131, 132) comprennent des parties de couplage complémentaires qui viennent en mise en prise pendant le serrage de ladite bande.

4. Ensemble de serrage selon la revendication 3, dans lequel ladite première extrémité comprend au moins un ensemble d'éléments de ressort (137) et ladite seconde extrémité comprend au moins une rainure (139) alignée avec lesdits éléments de ressort, dans lequel lesdits éléments de ressort mettent en prise des bords opposés de ladite rainure et forment un ajustement avec serrage avec ladite rainure lorsque la bande est serrée à l'aide dudit mécanisme de serrage.

5. Ensemble de serrage selon la revendication 3, dans lequel lesdites parties de couplage sont circonférentiellement alignées avec lesdites nervures.

6. Ensemble de serrage selon l'une quelconque des revendications 1 à 5, dans lequel ledit joint statique (170) est discontinu au niveau desdites extrémités (131, 132).

7. Ensemble de serrage selon la revendication 6, dans lequel ledit joint statique s'étend au-delà d'au moins l'une desdites extrémités de sorte que les extrémités opposées dudit ruban se chevauchent lorsque ladite bande est serrée.

8. Ensemble de serrage selon l'une quelconque des revendications précédentes, dans lequel ledit joint statique comprend un joint statique en fibres de verre, un joint statique en graphite ou un joint statique en mica.

9. Ensemble de serrage selon la revendication 8, dans lequel ledit joint statique comprend un joint statique en fibres de verre qui comprend une surface interne en aluminium orientée radialement vers l'intérieur.

10. Ensemble de serrage selon l'une quelconque des revendications précédentes, dans lequel le joint statique est fixé sur une partie centrale (60) de ladite bande et recouvre partiellement chacune desdites nervures (52, 54).
